# EUROPEAN PATENT APPLICATION

(11) **EP 3 378 671 A1**
(43) Date of publication of application: **26.09.2018**
(21) Application number: 17162789.6
(22) Date of filing: 24.03.2017
(51) Int. Cl.: B42D 25/351

(54) **SECURITY FOIL**

(71) Applicant: Authentic Vision GmbH, 5020 Salzburg (AT)
(72) Inventor: WEIß, Thomas, 5020 Salzburg (AT); BERGMÜLLER, Thomas, 5020 Salzburg (AT); HUPRICH, Philip, 5020 Salzburg (AT)
(74) Representative: Sonn & Partner Patentanwälte

(57) **Abstract**

Security foil (13) comprising at least a carrier layer (2), a protection layer (3) and a functional layer (4), wherein the functional layer (4) has at least one clearance (14), wherein the security foil (13) comprises a printed layer (17) arranged within and partially filling said clearance (14), and wherein the printed layer (17) represents a marking (12), and method for producing such a security foil (13) from an original foil (16) by selectively removing parts of the functional layer (4) of the original foil (16) to produce the clearance (14) in the functional layer (4) and by printing a marking (12) within the clearance (12) to produce the printed layer (17).

## Description

The invention concerns a method for producing a security foil, the security foil, a security device produced from such a security foil and a batch of those security devices.

Today many products or objects carry information, often encoded in machine-readable formats (e.g. as a bar-code, QR-code etc.). In some applications, the combination of machine-readable information together with security features is used for product authentication or verification purposes (cf. WO 2013/188897 A1). Typically, such a product authentication application is applied onto a product via labels or directly. In both scenarios, at least two production steps are required. In a first production step, the security feature is applied, often cut or transferred from some larger original material (cf. WO 2015/079014 A1). In a second production step, the machine-readable information is applied, either carrying authentication-relevant information of the security features and/or a (unique) identifier. Label-based solutions are often used because this allows to produce such security labels in a centralized facility and the labels can be applied onto any kind of objects and products with industry-standard procedures, e.g. at the product's manufacturer. However, labels have some significant shortcomings. First, applying them is expensive in high-volume productions. Secondly, as long as usual adhesives are used, they can be removed fairly easily from the objects. Especially for producing plastic parts, e.g. plastic objects or bottle closures, hot-foil-stamping and cold-foil-stamping are used to transfer parts of a raw material (i.e. the foil) via thermos-activated, pressure-activated or radiation-activated (e.g. by UV radiation) adhesives. Also shrink foils, which are wrapped around an object and shrunk by e.g. applying heat, or similar transfer technologies are well-known. The process of transferring one material onto an object is also known as "decoration" of the object and is widely used in the packaging and printing industry to create e.g. metal-like looks or transfer patterns to objects without resorting to printing devices. In a separate step, variable data (e.g. expiry date, production date, serial numbers, authentication relevant information) can be applied directly onto the object with technologies such as ink-jet, thermos-transfer, embossing, laser engraving etc. This is often referred to as "direct part marking". However, especially if non-simple patterns, e.g. a machine-readable code, with variable data should be applied, those processes (which are effective in high-volume production) are limited in terms of cost-effectiveness.

Transferable foils are available in various configurations, differing in layer structure, used materials and transfer technology. The present invention is (with slight adaptions) applicable to many or all transferable foil configurations. We will therefore introduce a meta model of a transferable foil (which corresponds to the principal components of a hot- or cold-stamping foil) comprising a carrier layer, a protection layer, a functional and an adhesive layer. In the transfer process the protection layer and the functional layer are disengaged from the carrier layer and transferred to an object in those regions, where the adhesive layer is activated, e.g. by applying heat, radiation or pressure. The functional layer is responsible for the (perceived) optical characteristics and typically a compound of multiple layers, comprising at least a replication layer and a reflection layer. As a comprehensive, abstract example to describe the present invention we will subsequently use a functional layer comprising a transparent replication layer and a metallized reflection layer. Generally, within the scope of the present invention, the functional layer may or may not comprise a metallic component (i.e. it may be metal-free). For example foils using refractive optical effects, e.g. lenticular print or based on non-metallic structured coating, which have a functional layer without metal or metallic constituents, may be used. For the sake of simplicity we generally omit subsequently further non-related details, such as layers, which are needed in practice but do not contribute to the present invention, e.g. a very thin lacquer layer between carrier and protection layer, functional layers comprising more than two layers, functional layers with different materials, e.g. with opaque non-metallized layers (cf. WO 2005 07 52 15 A3), etc.

It is known from DE 43 07 487 C2 that the shape of the transferred parts can be pre-determined by structuring the adhesive layer into activateable parts and non-activateable parts. While a personalized structuring in the adhesive layers may be used to pre-determine the shape of the parts transferred to the object, still a second production step is needed to print the marking needed e.g. for a security device verifiable by optical authentication means.

It is known from EP 0 420 261 B1 to produce a printed marking on a conventional hot-stamping foil. However the marking is arranged either above or below the reflection layer such that it is difficult and error-prone due to limited contrast and symbol clearance to optically detect and read-out such a marking using machine-vision equipment and image recognition methods.

With respect to methods which are based on simply overprinting an existing raw-material, it is noted that in addition to a separate production step, which is necessary to overprint the foil after application, a print image produced in this manner can be removed (e.g. scratched off) and replaced relatively easily. Therefore such methods can not match the security achieved with fully integrated foils, i.e. where the print image is embedded beneath a permanent surface layer.

It is an object of the present invention to overcome the disadvantages of the prior art. The present invention provides for security devices comprising a security feature as well as a printed marking, which can be both applied to the object in a single production step and wherein the printed marking enables easy and reliable read-out.

The method according to the present invention for producing a security foil, in particular a hot-stamping or cold-stamping foil, from an original foil comprising a carrier layer, a protection layer and a functional layer, comprises the following steps:
selectively removing at least a part of the functional layer of the original foil to produce a clearance in the functional layer; and
printing a marking within the clearance to produce a printed layer.

Correspondingly the security foil according to the present invention comprises a carrier layer, a protection layer and a functional layer, wherein the functional layer has at least one clearance, wherein the foil comprises a printed layer arranged within and partially filling said clearance, and wherein the printed layer represents a marking. Said clearance in the functional layer may be interpreted subsequently as the whole functional layer (i.e. all layers forming the functional layer; see below) being removed at this location. In practical applications, it may be beneficial to remove some but at least one of the layers forming the functional layer, e.g. only removing a reflection layer in the clearance area but sparing a replication layer.

A foil within the present context refers to a sheet-like product comprising a multilayered coating that transfers to the surface of an object. It has a functional layer, which can provide the foil with viewpoint-dependent optical characteristics. The functional layer preferably comprises a replication layer and a reflection layer, wherein the reflection layer comprises a metal material. Such foils may be hologram foils or generally foils for producing optically variable devices. Alternatively the functional layer may be metal-free as explained in the outset. The present method is performed after production of the functional layer of the original foil, but does not require a complete ready-to-use foil. Instead the original foil may also be an intermediate foil, e.g. without an adhesive layer. The clearance in the functional layer corresponds to an area, where at least one of the corresponding layers is removed. Typically at least a metalized reflection layer is removed, which is why the process is often called "demetalization". The clearance may have an invariant (i.e. fixed or constant) shape and size. The selective removal of parts of the functional layer leaves the functional layer intact in a pattern area within the clearance (where the foil thus keeps its original characteristics). In case the original foil is not an intermediate but a complete foil including an adhesive layer covering the functional layer, both - at least a part of the functional layer and the adhesive layer - may be removed during selective removal.

The marking is preferably a unique, random, individual, variable machine- and/or human-readable marking. A human-readable marking consists typically of letters and/or numbers. A machine-readable marking is preferably a bar-code, e.g. a 2D-Code. The marking may be an identifier. The printed layer representing the marking is thus arranged adjacent to (i.e. non-overlapping with) the functional layer. By printing the marking into the clearance, a degradation of contrast and machine-readability by a metalized background of the marking can be avoided.

The present security foil is suitable for equipping an object with a security device by transferring at least a section of the protection layer, the functional layer and the printed layer to the object. The application of the security device onto an object can be performed in a single, preferably non-registered production step. In particular the transferred section may be comprised entirely within the clearance.

The method may further comprise the step of applying an adhesive material to produce an adhesive layer covering the functional layer and/or the printed layer. The security foil may comprise an adhesive layer covering the functional layer and/or the printed layer. The adhesive material may act as a filling between a printed marking and the original functional layer. The adhesive layer may be adapted across modified and unmodified parts of the foil to allow transferring the foil using standard transfer methods, e.g. hot-foil stamping or cold-foil stamping. The adhesive layer may not be required if the original foil has an adhesive layer and the original adhesive layer remains intact on the functional layer and extends over the majority of the foil surface, i.e. the clearance and/or the printed layer are comparatively small and may not need to be covered by the adhesive layer.

In an advantageous embodiment the present method may comprise applying a first adhesive material to the printed layer, wherein said first adhesive material is different from a second adhesive material covering the functional layer. Correspondingly the adhesive layer of the present security foil may comprise a first adhesive material covering the printed layer and a second adhesive material covering the functional layer, wherein the first adhesive material is different from the second adhesive material. By using different adhesive materials, differences in the material properties of the printed layer and the functional layer, e.g. regarding thermal conductivity and/or transparency to radiation, can be compensated to allow for a uniform transfer process, in particular essentially uniform adherence over the surface of the security device.

Moreover the present method may comprise the step of filling at least a part of the clearance between the printed layer and the functional layer with a filling material. The present security foil may comprise a filling material arranged within the clearance of the functional layer, at least enclosing (i.e. at least partially surrounding) the printed layer. With the filling material a generally plane surface can be achieved, in particular for application to a plane surface on an object, e.g. with an adhesive layer having a homogeneous thickness.

In a preferred embodiment the removed parts forming the clearance corresponding to two neighbouring security devices (i.e. arranged side-by-side on the security foil before being transferred to an obejct) touch and/or overlap, such that one contionuous clearance is created spanning several security devices along the foil. In particular the functional layer may be removed completely except for the pattern areas forming the security features. In this setting, fairly inaccurate or unregistered transfer methods may be used, because misalignment results in transferring parts of the present security foil which are transparent, e.g. only consist of protection and adhesive layer. Hence, while maintaining good integration to the object's design, it is possible to transfer a larger portion of the present security foil to the object, which is guaranteed to contain at least the part corresponding to the security device.

In another preferred embodiment the adhesive layer is only applied to the region corresponding to the security device, while the remaining parts are left without an adhesive layer or with a non-activatable adhesive layer. In this setting, which corresponds basically to masking the parts to transfer, i.e. the security device, with activatable adhesive, a very inaccurate transfer process can be used while it is guaranteed that only the desired security device is transferred to the object. As an example, a rotary, heated cylinder without any special treatment suffices to transfer security devices via hot-foil stamping. In this setting there are no unwanted parts transferred to the object, even though a very large portion of the security foil may be exposed to the activators (UV, temperature, pressure) during the transfer process.

The arrangement and/or period of security devices on the security foil (i.e. the parts of the foil configured for producing security devices) may be synchronized with the application use case, i.e. that the continuous application of the present security foil onto the objects results in one transferred security device per object. For instance the period may be adapted to the distance of bottle caps or beverage cans in an industrial filling process. It may be necessary to account for border-line cases and/or countermeasures may need to be taken to compensate for accumulating offsets in the transfer process, which can e.g. be done with a very coarse registration.

In a preferred embodiment, the filling material is transparent. In this case the security device integrates flexibly with the appearance of the object.

In an alternative embodiment, the color or brightness of the filling material is complementary to the color or brightness respectively of the printed layer. Since the filling material appears as the background of the marking and the security feature (formed by the pattern area of the foil), an appearance similar to a tag or label can be achieved with such a filling material.

Preferably the filling material may cover the printed layer. This has the advantage that the filling material can compensate for differences in layer thickness between the printed layer and the functional layer. In a preferable embodiment the filling material may be ink applied in a second printing step, e.g. a black marking may be grounded white by filling at least a part of the clearance with white ink.

In an advantageous embodiment of the present method, during selectively removing parts of the functional layer a part of the functional layer having a predefined shape is spared such that said part is enclosed by the produced clearance. Consequently the clearance of the security foil may preferably enclose a security feature formed by a spared pattern area of the functional layer. The clearance delimits the pattern area, which maintains the original foil's characteristics. This has the advantage that the shape of the security feature, which is created by transferring the pattern area, is defined during the selective removal step and not during the transfer step (as with conventional security features).

The marking may comprise a machine-readable code, in particular a bar-code, a QR-Code or a DataMatrix code. Such codes are particularly suited for identification purposes, e.g. product registration, tracking and authentication, and benefit particularly from the improved contrast of the marking achieved with the present invention. An identification marking can be used for authentication together with the security features produced from the pattern area, e.g. by verifying the relative arrangement between the security feature and the marking. Additionally the security features within the pattern area may be recorded and may be encoded directly into the marker and/or stored together with an identifier, which is encoded in the marker, in a data base.

Advantageously the marking may be printed using a digital printing technology, in particular digital ink-jet printing. This allows for production of individual marking on each instance along the security foil and thus for each security device produced therefrom. Correspondingly the printed layer of the present security foil preferably comprises an ink.

The present invention also concerns a security device produced by application of the above security foil. Specifically it concerns a security device comprising a protection layer and a functional layer, wherein the functional layer has at least one clearance, wherein the security device comprises a printed layer arranged within and partially filling said clearance, and wherein the printed layer represents a marking. The functional layer may be of the type discussed above in connection with the security foil, comprising a replication layer and a reflection layer. In a preferred embodiment the security device comprises a security feature formed by a pattern area of the security foil, wherein the security feature has the original foil's characteristics. The security feature may be arranged within the clearance.

Finally, and with regard to copy protection of the security device, the invention concerns a batch of security devices having a randomly distributed offset between the marking represented by the printed layer and the functional layer, in particular a section of the functional layer delimited by said clearance, and/or having a randomly distributed offset between the clearance (or - analogously - the spared pattern area) and a reference marking provided in the functional layer, wherein one standard deviation of the offset is at least 50 micrometer. The registration of industrial printing steps is typically subject to tolerances exceeding this offset, e.g. not below 0.1 millimeters. Such registration tolerances occur when e.g. the clearance is registered with the printing step. Also the production of the clearance with said pattern area arranged within the clearance is randomly offset relative to a reference position (e.g. indicated by a reference marking) on the foil. Consequently, the security features extracted from the pattern area are randomly distributed relative to the pattern area's border.

These random offsets (and any other offsets evolving from the registration of two processing steps) provide a stochastic and hence unpredictable feature of the security device and thus can be used to authenticate the security device and identify forged security devices.

Finally it is preferable that the present security foil is configured for transferring a security device as described above from the security foil onto an object in a single production step, in particular in a single transfer step, e.g. by hot-foil stamping or cold-foil stamping.

The invention will be defined in more detail below by means of preferred exemplary embodiments, to which it is not to be limited to, however, and with reference to the drawings. In detail:
Fig. 1 schematically illustrates the meta model of a transferable foil used to explain the present invention;
Fig. 2 schematically illustrates a state-of-the-art production of security devices comprising a security feature and a machine-readable marking;
Fig. 3 schematically shows a security foil according to the present invention;
Fig. 4 schematically illustrates a production of a security device with the foil of Fig. 2;
Fig. 5 schematically illustrates the production of a first embodiment of a security foil according to the present invention in comparison with the production of a conventional security foil;
Fig. 6 schematically shows a production method for a second embodiment of the present invention;
Fig. 7A-C schematically shows the layered structure of five embodiments of a security foil according to the present invention, including the first embodiment according to Fig. 4;
Fig 8 schematically shows a possible security foil layout and transfer process for the seventh embodiment of the present invention;
Fig 9 schematically shows the layer structure of the present security foil for the eighth embodiment of the present invention; and
Fig. 10A and 10B schematically show the random offsets involved in the production of the security foil according to the present invention, which may be used as stochastic security features.

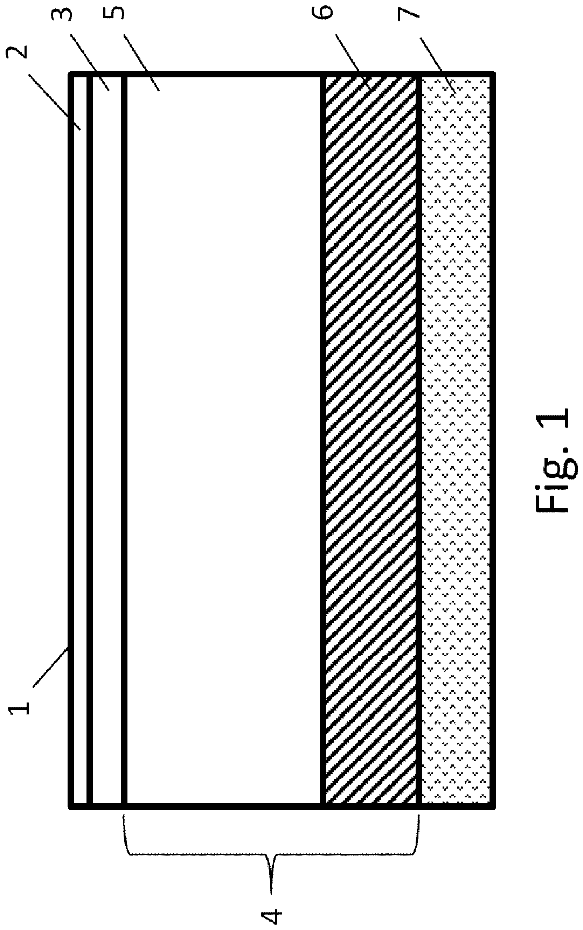

The meta foil 1 shown in Fig. 1 comprises a carrier layer 2, a protection layer 3, a functional layer 4 and an adhesive layer 7. The functional layer 4 comprises a replication layer 5 and a reflection layer 6. The reflection layer 6 in this example comprises a metal material. All subsequent features are based on this meta foil 1, whereas the compound functional layer 4 is depicted as a single layer for simplicity.

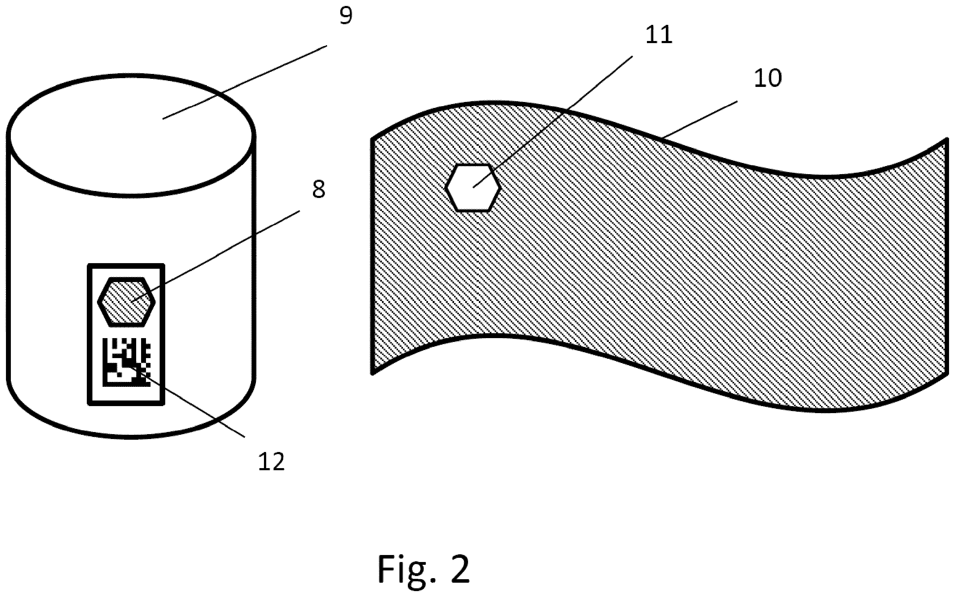

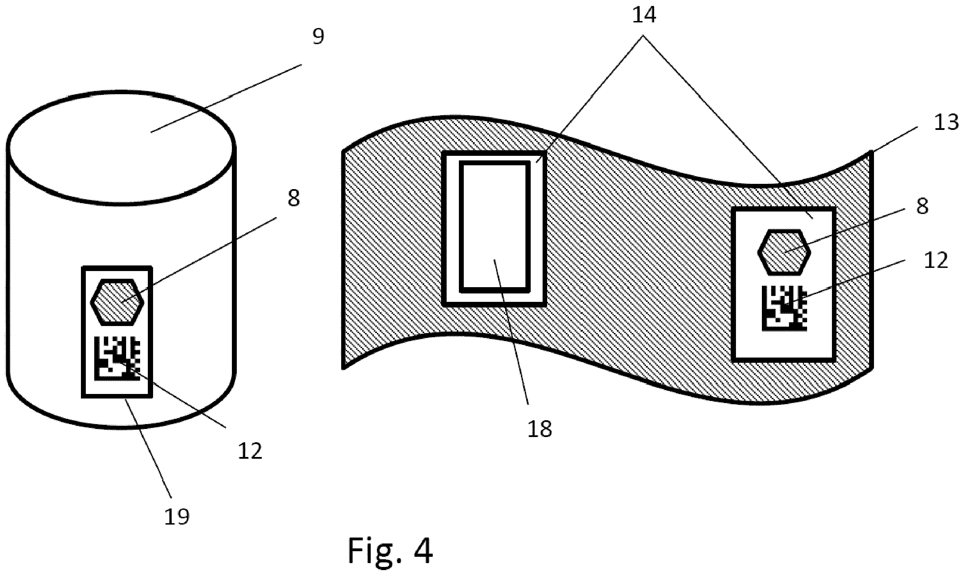

In a state-of-the-art production line according to Fig. 2, a security feature 8 is applied directly onto an object 9 (e.g. a product to be protected against counterfeiting) in the following steps: First, the security feature 8 is transferred from a raw material 10, e.g. a foil. The transfer is performed by hot-stamp foiling or cold-stamp foiling.. After the transfer, in an area 11 of the just transferred part of the raw material 10 forming the security feature 8, only a carrier layer 2 (see Fig. 4) of the raw material 10 remains. In a second step, the machine-readable marking 12 is applied by direct part marking, e.g. laser, ink-jet etc. onto the object 9. However in fast production lines it is difficult to register those two steps. Refer e.g. the production of bottle caps. In those production lines, the objects are continuously moving and rotating and it typically cannot be ensured at the direct partmarking step, which side of the bottle cap faces the marking machine. Consequently, in such situations it can happen that the security feature 8 and the marking 12 are arranged on opposite sides of the object 9. Additionally, many producers do not have the equipment to do direct part marking with variable and/or graphical content, which is needed for printing e.g. a QR-code or a DataMatrix-code.

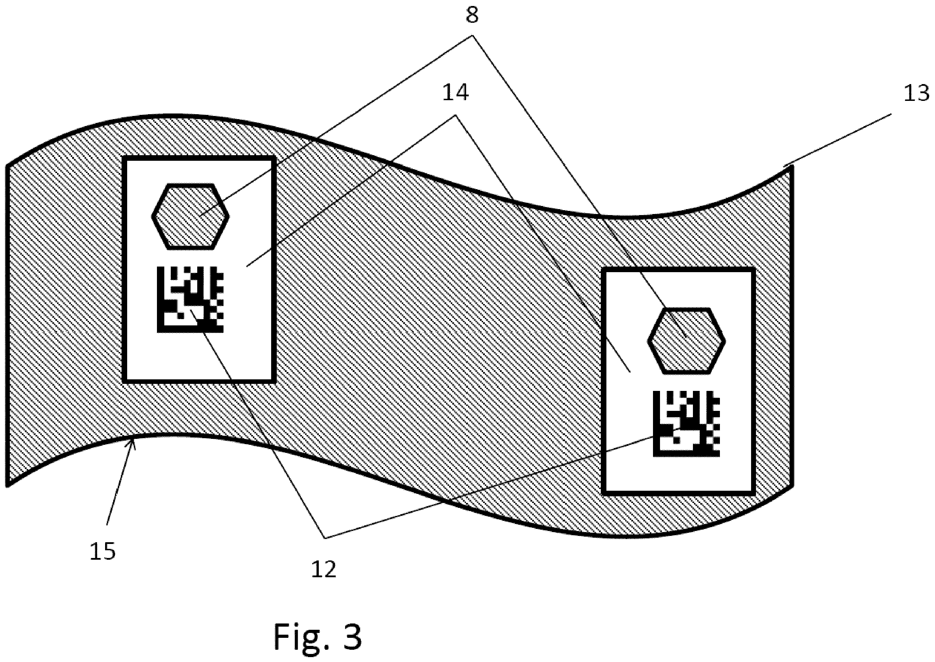

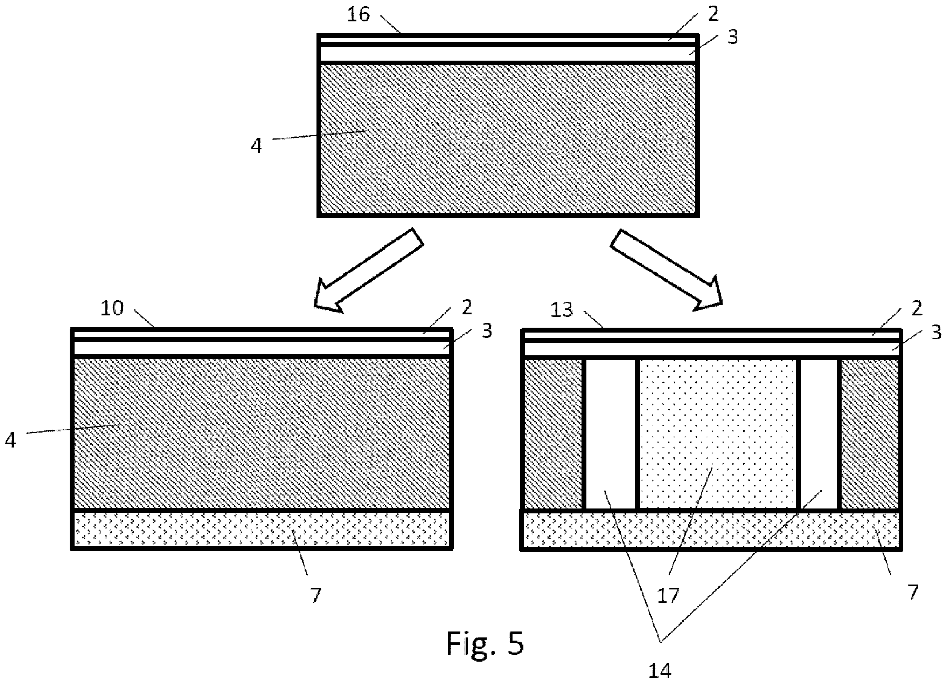

The present invention is based on the realization that transfer-technologies such as hot-foil and cold-foil stamping are available for very high production speeds (yet in an unregistered manner). Most of today's printing lines are already equipped with hot- or cold-foil stamping equipment. The present invention therefore proposes a transferable sheet-like product, in particular a security foil 13, which comprises a security feature 8 as well as a machine-readable marking 12 as shown in Fig. 3. The security feature 8 is delimited by a clearance 14 (see Fig. 5) in the functional layer 4 of the security foil 13. The marking 12 is arranged within the clearance 14 adjacent to the security feature 8. The security feature 8 and the surrounding area 15 of the security foil 13 between the clearance 14 and the edge or border of the security foil 13 have the original foil's characteristics, meaning that the functional layer 4 is intact in these areas. Since they are both part of the security foil 13, the security feature 8 and the machine-readable marking 12 can be transferred to the object 9 together in a single production step as illustrated in Fig. 4.

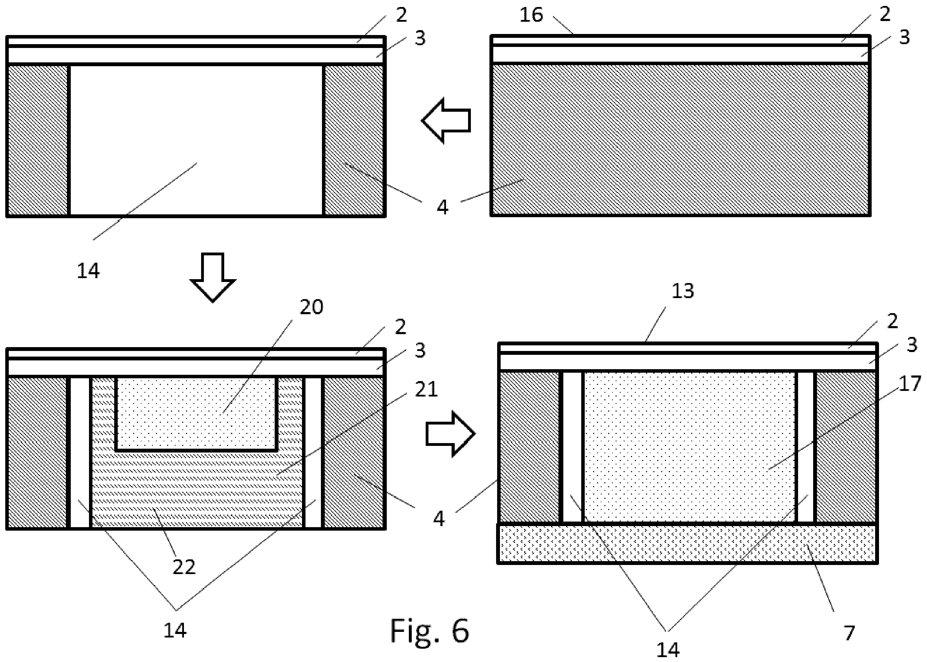

A first example of the inventive method for producing a security foil 13 is illustrated in Fig. 5. The method starts from a conventional intermediate foil used as an original foil 16. In the present example the original foil 16 is an intermediate holographic foil. It has a layered structure comprising the following layers: a carrier layer 2, a protection layer 3 and a functional layer 4. With respect to the structure of the functional layer 4 it is referred to the description of Fig. 1. The functional layer 4 is responsible for the holographic effects. In a conventional production line (see Fig. 5 left-hand side), a final adhesive layer 7 would be applied to the original foil 16 to produce a raw material 10 as disclosed in connection with Fig. 2. According to the present invention (see Fig. 5 right-hand side), first some portions of the original foil 16 are removed. Specifically by selectively removing the functional layer 4 from the original foil 16 in an area that shall later form the clearance 14. In the present example the clearance 14 is partially filled with a printed layer 17 representing the marking 12. The printed layer 17 may comprise differently colored material as will be described in more detail in connection with Fig. 6. During a transfer, in both cases everything between and including the protection layer 3 and the adhesive layer 7 is transferred to the object 9. Thus the part of the conventional raw material 10 transferred from the area 11 to the object 9 corresponds to the security feature 8 (compare Fig. 2) comprising a part of the protection layer 3, of the functional layer 4 and of the adhesive layer 7. The part of the present security foil 13 transferred from a transfer area 18 of the security foil 13 to the object 9 forms a security device 19. In contrast to the security feature 8 alone, the security device 19 additionally comprises the printed layer 17 representing the machine-readable marking 12, which is arranged in the clearance 14 of the functional layer 4. In this example the transfer area 18 is a subset or section of clearance 14 together with a pattern area within the clearance 14 for producing the security feature 8.

For practical applications it is beneficial for the production of the present security foil 13 not to use a finished raw material 10 as the original foil 16, but to intercept an existing production chain while the raw material 10 is still an intermediate foil without the adhesive layer 7 and use this intermediate foil as the original foil 16 for producing the security foil 13. Fig. 6 shows an exemplary method for producing the security foil 13 from an intermediate foil as the original foil 16 comprising the following steps: removing at least one part of the functional layer 4 to create a clearance 14 within the functional layer 4. This removal-step can be performed e.g. with chemical reactions or a laser-based process. Then the foil is conveyed into a digital printing press / ink-jet etc. (not shown) where a machine-readable marking 12 is applied in a registered way forming the printed layer 17. E.g. it can be directly printed onto the protection layer 3. For the registration of the foil and the digital printing steps, print marks can be used. Such print-marks can be produced e.g. by leaving some metalized material of the functional layer 4 to form a print-mark, which can be recognized by a printing press for registration purposes (not shown).

As shown in Fig. 6, more than one layer may be applied in the clearance 14 by printing. For example in a two-color print, it may be desirable to print a black code pattern with a first material 20 onto the protection layer 3 and then filling at least a part of the clearance 14 with a filling material 21 to produce a white grounding layer 22, where the two layers 20, 22 together form a printed layer 17 representing the machine-readable marking 12. For simplicity, in all other figures only one printed layer 17 is depicted, representing one or more printed layers (e.g. 20, 22). In the final step, an adhesive layer 7 is applied, similar to the production of the conventional raw material 10 (cf. Fig. 5).

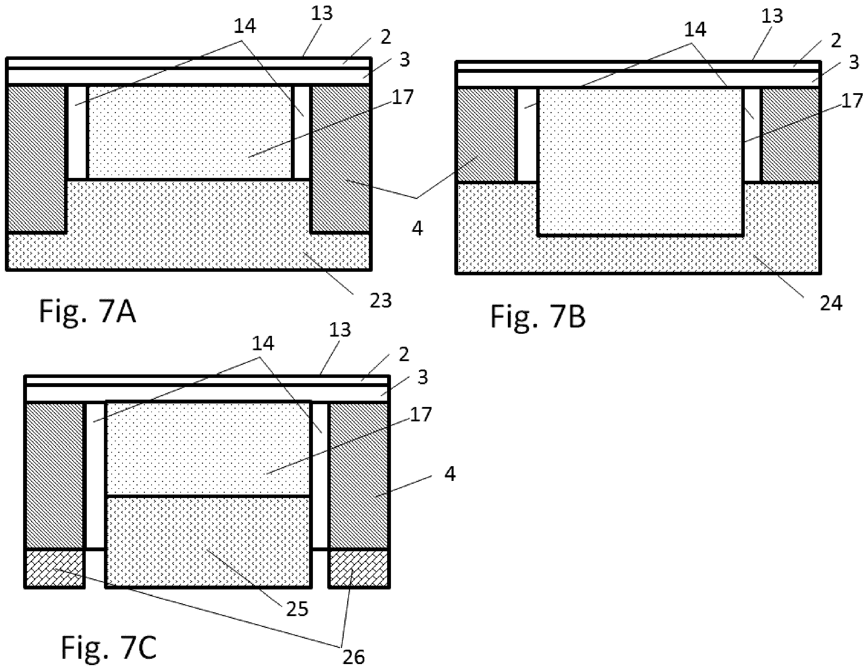

It has turned out that in practice different embodiments need to be considered. In most illustrations (e.g. Fig. 5 and 6) the printed layer 17 is indicated having the same thickness as the functional layer 4. Yet this is unlikely in practice, as Fig. 7A-C reveal. At least four configurations additional to the optimal configuration shown in Fig. 5 and Fig. 6 may be observed: Fig. 7A shows a situation where the printed layer 17 is thinner than the functional layer 4. This can be compensated (although not exclusively) by using the adhesive layer 23 to cover-up those irregularities and provide a plane surface of the foil. The situation depicted in Fig. 7B is complementary to Fig. 7A in that the printed layer 17 is thicker than the functional layer 4. Again such irregularities can be covered up with an appropriate adhesive layer 24.

With regard to Fig. 7C it is instructive to consider that the functional layer 4, which comprises e.g. metal, has different physical properties than the printed layer 17, which typically comprises ink. Especially heat-conductivity and pressure-damping characteristics differ, which may cause problems in the transfer process, where typically thermal- or pressure-activation of the adhesive is key. Therefore it may be beneficial to use different adhesive layer materials 25, 26 to compensate such differences. Specifically the adhesive layer materials 25, 26 may be selected such that a constant heat/pressure can be used in the transfer process and all parts of the security device 19 are transferred appropriately. Fig. 7C also reveals small gaps in the adhesive layer, which may still allow good transfer to the object 9 while this may have benefits in terms of processability, i.e. the adhesive layer does not interfere with the clearance 14. Contrary to the illustration in Fig. 7A,7B the adhesive layer may be soaked in an uncontrolled manner into the clearance whilst being applied.

Fig. 7A-C also shows that the clearance may or may not be covered by the adhesive layer. Especially in the first case, since the protection layer 3 and replication layer 5 are typically transparent, to avoid interferences during the transfer process, the clearance 14 may be filled with transparent material.

Due to the different structure, the security foil 13 does not have the exact same physical properties as a conventional raw material 10. Yet the very same transfer processes can be used by only modifying the process parameters such as heat and/or pressure and/or time, because the general structure comprising the surrounding carrier layer 2, protection layer 3 and adhesive layer 7 remains the same. Similarly, the modified part comprising the functional layer 4 and the printed layer 17 as well as the clearance 14 can be seen as a functional layer with different properties, such as a large number of different function layers are known - and all of them can be transferred using the same process. Thus the same machinery can be used for the transfer process, albeit it may need to be configured with different operation parameters.

Consequently, a security device 19 can be transferred from the security foil 13 in one non-registered production step onto an object 9. A coarse registration may be needed to not unintentionally transfer other parts of the security foil 13 interfering with the object's design. For such cases, it is beneficial to provide a clearance 14 that is larger than the security device 19. This accounts for manufacturing- and registration tolerances.

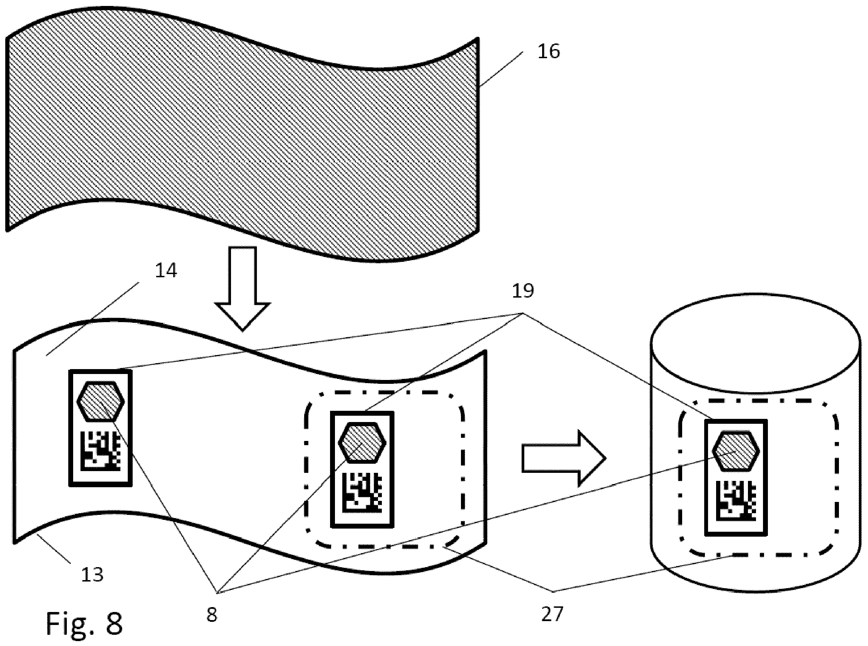

As shown in Fig. 8, in a preferable setting the original foil 16 is processed in a way such that the clearance 14 corresponding to each entity of the security device 19 overlaps. The result is that the security foil 13 has no areas showing the functional layer 4 except for the pattern area corresponding to the security feature 8. The clearance 14 is typically transparent. Hence only a very coarse registration is needed in the transfer process, because transferring additional, unwanted transparent parts in a large area 27 does not interfere with the design of the object.

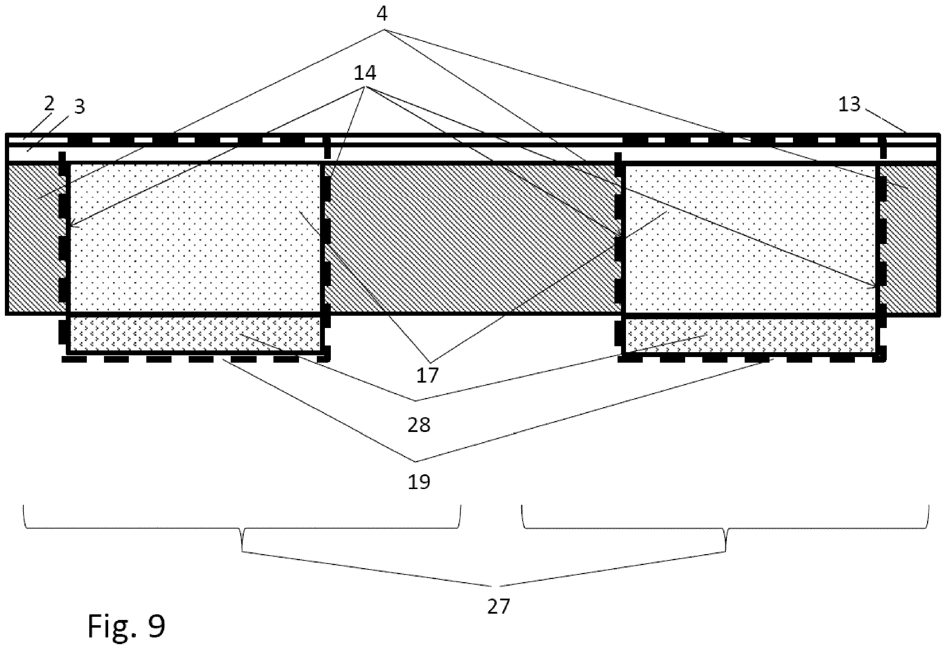

In another preferable setting shown in Fig. 9, the adhesive layer 28 is only applied in the area corresponding to the security device 19 (indicated by the dashed rectangles). Again, only a coarse registration is needed, because a larger area 27 may be exposed to the activators, e.g. temperature, pressure or radiation, and only the area corresponding to the security device 19 will be transferred to the object 9, since only this area is covered by an activateable adhesive layer. This also allows to fill the clearance 14 completely with the printed layer 17. This setting is particulary cost-effective, because only a small part representing the area corresponding to the security device 19 of the functional layer 4 needs to be removed.

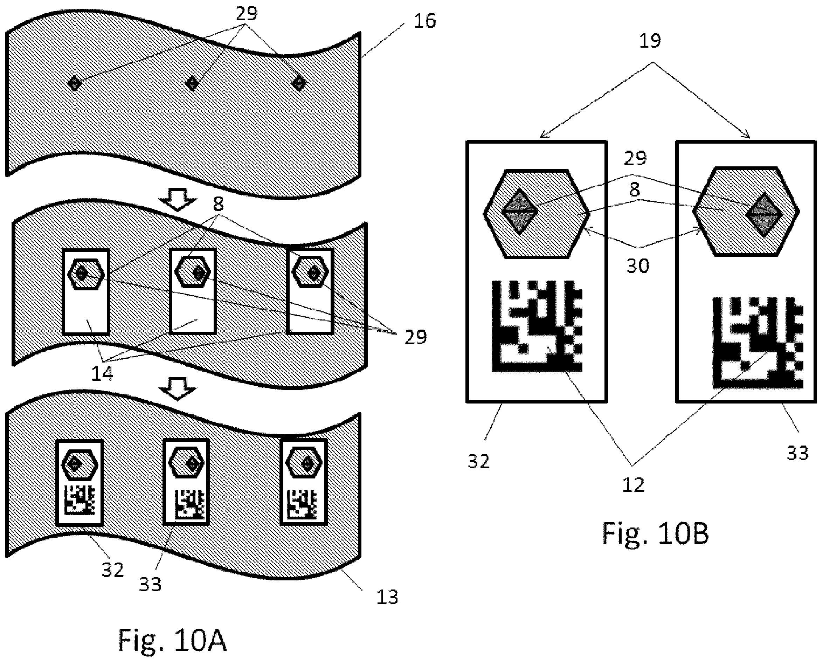

Each step in the process shown in Fig. 10A of transforming an original foil 16 to the security foil 13 is subject to registration- and process tolerances. The original foil 16, in particular the functional layer 4, may comprise at least one reference marking 29, which can be detected optically and may occur in a periodic manner. In a preferable embodiment the clearance 14 is chosen in a way that it encloses a security feature 8, such that the security feature 8 corresponds to an area in the original foil 16 comprising at least one reference marking 29. This typically requires a registration between the original foil 16, i.e. in respect to the at least one reference marking 29, in the selective removal process producing the clearance 14. This registration is subject to registration tolerances, hence the at least one reference marking 29 may have a (random) offset relative to the security feature border 30. In a following production step, the marking 12 is arranged in the clearance 14, which again uses registration means (e.g. the mentioned printing marks) which are subject to manufacturing tolerances as well. Consequently, the marking 12 may be characterized by having a random offset in respect to the security feature 8 and in particular also to the reference marking 29. As shown in Fig. 10B, the stochastic nature of registration tolerances may produce random and unique arrangements of the marking 12, the reference marking 29 and the security feature border 30 comprised in the security device 19. In particular, two entities 32, 33 from a batch of security devices may have different random arrangements, albeit being produced with a registered process. The marking 12 may be used to store a representation of the random arrangement and/or an identifier, which allows e.g. to store the representation of the random arrangement together with said identifier in a database, in particular for authentication purposes of the security device 19.

## Claims

1. Method for producing a security foil (13) from an original foil (16) comprising at least a carrier layer (2), a protection layer (3) and a functional layer (4), the method comprising the steps of:
selectively removing parts of the functional layer (4) in the original foil (16) to produce a clearance (14) in the functional layer (4); and
printing a marking (12) within the clearance (14) to produce a printed layer (17).

2. Method according to claim 1 **characterized by**
applying an adhesive material to produce an adhesive layer (7) covering the functional layer (4) and/or the printed layer (17).

3. Method according to claim 1 or 2, **characterized by** applying a first adhesive material (25) on the printed layer (17), wherein said first adhesive material (25) is different from a second adhesive material (26) covering the functional layer (4).

4. Method according to one of claim 1 to 3, **characterized by**
filling at least a part of the clearance (14) between the printed layer (17) and the functional layer (4) with a filling material.

5. Method according to claim 4, **characterized in that** during selectively removing parts of the functional layer (4) a pattern area of the functional layer (4) having a predefined shape is spared such that said pattern area is enclosed by the produced clearance (14).

6. Method according to one of claims 1 to 5 **characterized in that** the marking (12) is printed using a digital printing technology, in particular digital ink-jet printing.

7. Security foil (13) comprising at least a carrier layer (2), a protection layer (3), and a functional layer (4) **characterized in that** the functional layer (4) has at least one clearance (14) and **in that** the security foil (13) comprises a printed layer (17) arranged within and partially filling said clearance (14), wherein the printed layer (17) represents a marking (12).

8. Security foil (13) according to claim 7, **characterized in that** the security foil (13) comprises an adhesive layer (7) covering the functional layer (4) and/or the printed layer (17).

9. Security foil (13) according to claim 8, **characterized in that** the adhesive layer comprises a first adhesive material (25) covering the printed layer (17) and a second adhesive material (26) covering the functional layer (4), wherein the first adhesive material (25) is different from the second adhesive material (26).

10. Security foil (13) according to one of claims 7 to 9, **characterized in that** the security foil (13) comprises a filling material (19) arranged within the clearance (8) of the functional layer (9), at least enclosing the printed layer (16).

11. Security foil (13) according to claim 10, **characterized in that** the filling material (22) is transparent or **in that** the color or brightness of the filling material (22) is complementary to the color or brightness respectively of the printed layer (17).

12. Security foil (13) according to one of claims 7 to 11, **characterized in that** the clearance (14) encloses a security feature (8) formed by a spared pattern area of the functional layer (4).

13. Security foil (13) according to one of claims 7 to 12 **characterized in that** the security foil (13) is configured for transferring a security device according to claim 14 from the security foil (13) onto an object in a single production step.

14. Security device (19) comprising a protection layer (2) and a functional layer (4), **characterized in that** the functional layer (4) has at least one clearance (14), and **in that** the security device (19) comprises a printed layer (17) arranged within and partially filling said clearance (14), wherein the printed layer (17) represents a marking (12).

15. Batch of security devices (19) according to claim 14 having a randomly distributed offset between the marking (12) represented by the printed layer (17) and the functional layer (4) and/or having a randomly distributed offset between the clearance (14) and a reference marking provided in the functional layer (4), wherein one standard deviation of the offset is at least 50 micrometer.
